# EUROPÄISCHE PATENTSCHRIFT

(11) **EP 2 044 670 B1**
(45) Veröffentlichungstag und Bekanntmachung des Hinweises auf die Patenterteilung: **02.01.2013**
(21) Anmeldenummer: 07729517.8
(22) Anmeldetag: 25.05.2007
(51) Int. Cl.: H02J 7/14, H02J 9/04, H02P 9/10

(54) **GENERATORVORRICHTUNG MIT AKTIVEM LOAD DUMP-SCHUTZ**
GENERATOR APPARATUS WITH ACTIVE LOAD DUMP PROTECTION
DISPOSITIF GÉNÉRATEUR À PROTECTION ACTIVE CONTRE LES DÉCHARGES DE CHARGE

(30) Priorität: 14.07.2006 DE 102006032736
(43) Veröffentlichungstag der Anmeldung: 08.04.2009
(73) Patentinhaber: Robert Bosch GmbH, 70442 Stuttgart (DE)
(72) Erfinder: MUELLER, Markus, 74078 Heilbronn (DE)
(86) Internationale Anmeldenummer: PCT/EP2007/055088
(87) Internationale Veröffentlichungsnummer: WO 2008/006643

(56) Entgegenhaltungen:
- EP-A- 0 179 194
- EP-A- 1 278 283
- DE-A1- 4 300 882
- DE-C1- 19 742 391

## Beschreibung

Die Erfindung betrifft eine Generatorvorrichtung mit einem Generator, welcher eine Erregerwicklung und Phasenwicklungen aufweist, einem Generatorregler, der dem Generator eine Regelspannung liefert, und einer Gleichrichterbrücke zur Gleichrichtung der vom Generator bereitgestellten Phasenspannungen zwecks Bereitstellung einer Versorgungsgleichspannung für eine schaltbare Last auf einer Versorgungsgleichspannungsleitung.

### Stand der Technik

Eine Generatorvorrichtung, die einen Generator, einen Generatorregler und eine Gleichrichterbrücke aufweist, ist bereits bekannt. Sie wird beispielsweise in einem Kraftfahrzeug zur Gleichrichtung der KFZ-Generatorspannung verwendet. Die Gleichrichterbrücke der bekannten Generatorvorrichtung weist mindestens sechs Zenerdioden auf, welche in einen Kühlkörper eingepresst sein können. Die Verwendung von Zenerdioden, welche ab einer bestimmten Spannung in Rückwärtsrichtung leitend werden, dient zum Schutz des Generatorreglers und des Bordnetzes vor Überspannungen, die durch Lastabschaltungen verursacht werden. Abhängig vom jeweils vorliegenden Generator-Nennstrom werden Zenerdioden unterschiedlicher Stromklassen eingesetzt, beispielsweise 35 A, 50 A, 65 A und 80 A. Aus technischen Gründen, insbesondere zur Berücksichtigung eines Load dump-Falles, sind die genannten Stromklassen nochmals in sogenannte Zenerspannungsklassen unterteilt, beispielsweise zwischen 19 V und 25 V in 1,5 V-Schritten.

Die Zenerdioden werden dann in Rückwärtsrichtung betrieben, wenn große Generatorströme schlagartig abgeschaltet werden. Dies ist beispielsweise bei einem sogenannten Load dump der Fall, welcher einem Abfall des B+-Kabels, d. h. der Gleichspannungsversorgungsleitung des Bordnetzes, entspricht. In einem Load dump-Fall kann der Generatorregler die Abschaltung des Generatorstromes nicht schnell genug ausregeln. Der Generatorstrom muss aus physikalischen Gründen weiter fließen, da ein Strom durch eine Induktivität nicht springen kann.

Da im Falle eines Load dump die Lasten des Bordnetzes und auch die Fahrzeugbatterie nicht mehr an den Generator angeschlossen sind, kommt es wegen der in der Erregerwicklung bzw. im Läufer gespeicherten Energie zu einem Anstieg der Phasenspannungen in den Phasenwicklungen bzw. Ständerwicklungen. Dieser Spannungsanstieg in den Phasenwicklungen wiederum führt zu einem Druchbrechen der Zenerdioden in Rückwärtsrichtung.

Aus der DE 101 35 168 A1 ist eine Vorrichtung zum Schutz elektronischer Bauelemente vor Überspannungen der Netzspannung bekannt, welche mindestens einen Halbleiter-Transistor aufweist, der mittels einer Ansteuerschaltung bei vorbestimmten Überspannungswerten durchschaltbar ist, wodurch eine Umwandlung elektrischer Energie in Wärmeenergie erfolgt.

Eine Generator vorrichtung mit den Merkmalen des Oberbegriffs des Anspruchs 1 ist aus DE 19742391C1 bekannt.

### Vorteile der Erfindung

Eine Generatorvorrichtung mit den im Anspruch 1 angegebenen Merkmalen weist demgegenüber den Vorteil auf, dass Load dump-Energie gepuffert und dann zur Versorgung einer Last bzw. eines Verbrauchers verwendet werden kann. Ein weiterer Vorteil besteht darin, dass in der Gleichrichterbrücke Zenerdioden einer niedrigeren Stromklasse verwendet werden können. Dies führt zu Kostenvorteilen. Gegebenenfalls kann mit der Erfindung auch erreicht werden, dass die Gleichrichterbrücke mit weniger Zenerdioden auskommt. So sind Gleichrichterbrücken bekannt, bei denen in jedem der Diodenstränge jeweils zwei parallel geschaltete Zenerdioden in Reihe geschaltet sind. In diesem Fall kann in jedem Diodenstrang gegebenenfalls auf die jeweils parallel geschaltete zweite Diode verzichtet werden.

Vorzugsweise weist die Detektoreinheit ein Messdatenerfassungsmodul, ein Auswertemodul und ein Schalteransteuermodul auf. Das Messdatenerfassungsmodul dient zur Erfassung des Generatorstromes und/oder der Versorgungsgleichspannung. Das Auswertemodul detektiert in vorteilhafter Weise Lastabschaltungen durch eine Auswertung des Gradienten des Generatorstromes und/oder des Gradienten der Versorgungsgleichspannung. Durch diese Auswertung des Gradienten können Lastabschaltungen sicher detektiert werden. Die vom Auswertemodul detektierte Information über eine Lastabschaltung wird vom Schalteransteuermodul umgesetzt in Schaltersteuersignale, so dass die durch die Lastabschaltung entstandene Load dump-Energie an einen Energiespeicher übertragen werden kann. Von dort aus kann sie in nutzbringender Weise an die an den Generator angeschlossenen Lasten bzw. Verbraucher abgegeben werden. Alternativ dazu kann die im Energiespeicher abgespeicherte Energie auch nach Masse abgeleitet werden.

Weitere vorteilhafte Eigenschaften der Erfindung ergeben sich aus deren beispielhafter Erläuterung anhand der Figur.

### Zeichnung

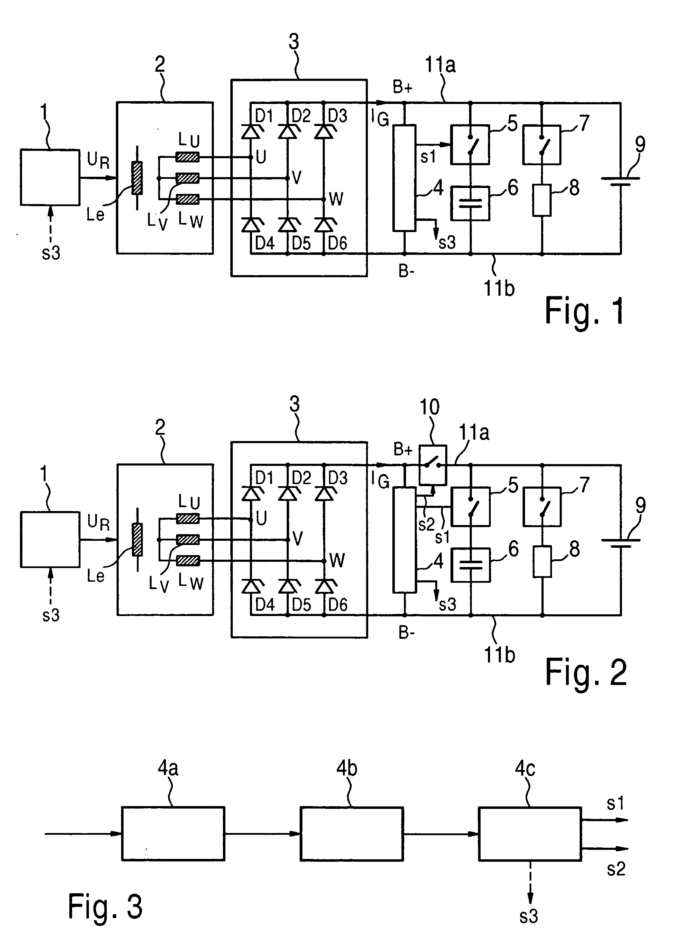

Die Figur 1 zeigt eine Blockdarstellung zur Erläuterung eines ersten Ausführungsbeispiels für die Erfindung. Die Figur 2 zeigt eine Blockdarstellung zur Erläuterung eines zweiten Ausführungsbeispiels für die Erfindung. Die Figur 3 zeigt eine Blockdarstellung zur Erläuterung eines Ausführungsbeispiels für den Aufbau der in den Figuren 1 und 2 dargestellten Detektoreinheit.

### Beschreibung

Die Figur 1 zeigt eine Blockdarstellung zur Erläuterung eines ersten Ausführungsbeispiels für die Erfindung. Bei der dort dargestellten Generatorvorrichtung handelt es sich um eine KFZ-Generatorvorrichtung, welche zur Bereitstellung von Versorgungsgleichspannungen B+ und B- für das Bordnetz eines Kraftfahrzeugs auf Versorgungsgleichspannungsleitungen 11a und 11b vorgesehen ist.

Die gezeigte Generatorvorrichtung weist einen Generatorregler 1, einen Generator 2 und eine Gleichrichterbrücke 3 auf, die in einen nicht gezeichneten Kühlkörper eingepresst sein kann. Der Generatorregler 1 stellt dem Generator 2 eine Regelspannung U_{R} zur Verfügung. Der Generator 2 enthält einen Rotor mit einer Erregerspule Lₑ, die im Betrieb mit dem Erregerstrom beaufschlagt wird, und einen Stator, welcher Phasenwicklungen L_{U}, Lv und L_{W} aufweist. Ausgangsseitig stellt der Generator 2 Phasenspannungen U, V und W zur Verfügung, die der nachgeschalteten Gleichrichterbrücke 3 als Eingangsgrößen dienen. Die Gleichrichterbrücke 3 weist sechs Zenerdioden D1, D2, D3, D4, D5 und D6 auf, wobei die Dioden D1 und D4, D2 und D5 sowie D3 und D6 jeweils einen Diodenstrang bilden. Die Gleichrichterbrücke 3 dient zur Umwandlung der ihr zugeführten Phasenspannungen U, V, W in die Gleichspannungen B+ und B-. Diese werden dem Bordnetz des Kraftfahrzeuges über die Versorgungsgleichspannungsleitungen 11a und 11b zugeführt.

Die dem Bordnetz bereitgestellten Versorgungsgleichspannungen B+ und B- liegen an einer Detektoreinheit 4 an. Diese ist zur Erkennung einer Lastabschaltung vorgesehen, wie sie beispielsweise bei einer Unterbrechung oder einem Abfall der Versorgungsgleichspannungsleitung 11a auftritt. Hat die Detektoreinheit das Auftreten einer Lastabschaltung erkannt, dann generiert sie ein Steuersignal s1, welches einen Schalter 5 schließt, d. h. in den leitenden Zustand bringt. Ein Anschluss dieses Schalters 5, bei dem es sich um einen Schalttransistor handelt, ist an die Versorgungsgleichspannungsleitung 11a angeschlossen. Der andere Anschluss des Schalters 5 ist mit einem Anschluss eines Energiespeichers 6 verbunden, dessen anderer Anschluss mit der weiteren Versorgungsgleichspannungsleitung 11b bzw. dem Bezugspotential verbunden ist. Ist der Schalter 5 geschlossen, dann ist der Energiespeicher 6 über den Schalter 5 mit der Versorgungsgleichspannungsleitung 11a verbunden, so dass beim Vorliegen einer durch den Load dump-Vorgang verursachten Überspannung ein Aufladen des Energiespeichers 6 erfolgt. Ist der Load dump beendet, was nach etwa 400 ms der Fall ist, dann generiert die Detektoreinheit 4 ein Steuersignal s1, welches den Schalter 5 wieder in den gesperrten Zustand bringt.

Die im Energiespeicher 6 gespeicherte Energie kann nachfolgend in nutzbringender Weise wieder in das Bordnetz rückgespeist werden. Zu diesem Zweck führt die Detektoreinheit 4 dem Generatorregler 1 ein Steuersignal s3 zu, welches den Generatorregler 1 über das Auftreten eines Load dump-Falles informiert. Der Generatorregler 1 stellt nach Ablauf eines vorgegebenen, definierten Zeitintervalles nach dem Auftreten des Load dump-Falles oder nach einer Energie-Anforderung eines Bordnetz-Verbrauchers dem Generator 2 eine Regelspannung U_{R} zur Verfügung, auf Grund welcher der die Erregerwicklung Lₑ durchfließende Erregerstrom reduziert wird. Dies führt dazu, dass auch der in der Versorgungsgleichspannungsleitung 11a fließende Generatorstrom I_{G} bis auf Null reduziert wird. Ist dies geschehen, dann bringt die Detektoreinheit 4 über das Steuersignal s1 den Schalter 5 wieder in seinen leitenden Zustand. In diesem leitenden Zustand des Schalters 5 wird die im Energiespeicher 6 abgespeicherte Load dump-Energie über die Versorgungsgleichspannungsleitung 11a in das Bordnetz rückgespeist und dort beispielsweise über den geschlossenen Schalter 7 dem Verbraucher 8 zugeführt. Bei diesem Verbraucher 8 handelt es sich beispielsweise um die Sitzheizung oder die Heckscheibenheizung des Kraftfahrzeugs.

Ist der Energiespeicher 6 entladen, dann wird der Schalter 5 von der Detektoreinheit 4 wieder in seinen gesperrten Zustand gebracht.

Alternativ zu einer Rückspeisung der im Energiespeicher 6 gespeicherten Load dump-Energie in das Bordnetz kann diese Load dump-Energie auch über einen herbeigeführten Kurzschluss nach Masse abgeführt werden.

Die Figur 2 zeigt eine Blockdarstellung zur Erläuterung eines zweiten Ausführungsbeispiels für die Erfindung. Bei der dort dargestellten Generatorvorrichtung handelt es sich ebenfalls um eine KFZ-Generatorvorrichtung, welche zur Bereitstellung von Versorgungsgleichspannungen B+ und B- für das Bordnetz eines Kraftfahrzeugs auf Versorgungsgleichspannungsleitungen 11a und 11b vorgesehen ist.

Die gezeigte Generatorvorrichtung weist einen Generatorregler 1, einen Generator 2 und eine Gleichrichterbrücke 3 auf, die in einen nicht gezeichneten Kühlkörper eingepresst sein kann. Der Generatorregler 1 stellt den Generator 2 eine Regelspannung U_{R} zur Verfügung. Der Generator 2 enthält einen Rotor mit einer Erregerspule Lₑ, die im Betrieb mit dem Erregerstrom beaufschlagt wird, und einen Stator, welcher Phasenwicklungen L_{U}, Lv und L_{W} aufweist. Ausgangsseitig stellt der Generator 2 Phasenspannungen U, V und W zur Verfügung, die der nachgeschalteten Gleichrichterbrücke 3 als Eingangsgrößen dienen. Die Gleichrichterbrücke 3 weist sechs Zenerdioden D1, D2, D3, D4, D5 und D6 auf, wobei die Dioden D1 und D4, D2 und D5 sowie D3 und D6 jeweils einen Diodenstrang bilden. Die Gleichrichterbrücke 3 dient zur Umwandlung der ihr zugeführten Phasenspannungen U, V, W in die Gleichspannungen B+ und B-. Diese werden dem Bordnetz des Kraftfahrzeugs über die Versorgungsgleichspannungsleitungen 11a und 11b zugeführt.

Die dem Bordnetz bereitgestellten Versorgungsgleichspannungen B+ und B- liegen an einer Detektoreinheit 4 an. Diese ist zur Erkennung einer Lastabschaltung vorgesehen, wie sie beispielsweise bei einer Unterbrechung oder einem Abfall der Versorgungsgleichspannungsleitung 11a auftritt. Hat die Detektoreinheit das Auftreten einer Lastabschaltung erkannt, dann generiert sie ein Steuersignal s1, welches einen Schalter 5 schließt, d. h. in den leitenden Zustand bringt. Ein Anschluss dieses Schalters 5, bei dem es sich um einen Schalttransistor handelt, ist an die Versorgungsgleichspannungsleitung 11a angeschlossen. Der andere Anschluss des Schalters 5 ist mit einem Anschluss eines Energiespeichers 6 verbunden, dessen anderer Anschluss mit der weiteren Versorgungsgleichspannungsleitung 11b bzw. dem Bezugspotential verbunden ist. Ist der Schalter 5 geschlossen, dann ist der Energiespeicher 6 über den Schalter 5 mit der Versorgungsgleichspannungsleitung 11a verbunden, so dass beim Vorliegen einer durch den Load dump-Vorgang verursachten Überspannung ein Aufladen des Energiespeichers 6 erfolgt. Ist der Load dump beendet, was nach etwa 400 ms der Fall ist, dann generiert die Detektoreinheit 4 ein Steuersignal s1, welches den Schalter 5 wieder in den gesperrten Zustand bringt.

Die im Energiespeicher 6 gespeicherte Energie kann nachfolgend in nutzbringender Weise wieder in das Bordnetz rückgespeist werden. Zu diesem Zweck führt die Detektoreinheit 4 zunächst einem in der Versorgungsgleichspannungsleitung 11a angeordneten Schalter 10 ein Steuersignal s2 zu. Dieses steuert den Schalter 10 derart, dass der in Richtung des Bordnetzes fließende Generatorstrom I_{G} allmählich bis auf Null reduziert wird. Ist dies geschehen, dann bringt die Detektoreinheit 4 über das Steuersignal s1 den Schalter 5 wieder in seinen leitenden Zustand. In diesem leitenden Zustand des Schalters 5 wird die im Energiespeicher 6 abgespeicherte Load dump-Energie über die Versorgungsgleichspannungsleitung 11a in das Bordnetz rückgespeist und dort beispielsweise über den geschlossenen Schalter 7 dem Verbraucher 8 zugeführt. Bei diesem Verbraucher 8 handelt es sich beispielsweise um die Sitzheizung oder die Heckscheibenheizung des Kraftfahrzeugs.

Beim Schalter 10 handelt es sich beispielsweise um einen Schalter, der seinen Widerstand linear verändert. Wird ein mechanischer Schalter verwendet, der nur die Schalterstellungen "AN" oder "AUS" aufweist, so muss sichergestellt sein, dass dieser erst dann einen Schaltbefehl erhält, wenn der Generatorstrom I_{G} = OA beträgt, beispielsweise für Verbraucher, die im Nachlauf betrieben werden, wie dies bei Lüftern der Fall ist. Ansonsten wäre ein Lastabwurf und eine Belastung der Zenerdioden in Rückwärtsrichtung die Folge.

Als Alternative hierzu gibt es die Möglichkeit, über das Steuersignal s3 die Regelspannung auf einen Wert zu verringern, der kleiner ist als die Batteriespannung. In diesem Fall gibt der Generator dann keinen Strom mehr ab.

Ist der Energiespeicher 6 entladen, dann wird von der Detektoreinheit 4 der Schalter 5 wieder in seinen gesperrten Zustand und der Schalter 10 in seinen leitenden Zustand gebracht.

Die Figur 3 zeigt eine Blockdarstellung zur Erläuterung eines Ausführungsbeispiels für den Aufbau der in den Figuren 1 und 2 dargestellten Detektoreinheit 4. Diese weist ein Messdatenerfassungsmodul 4a, ein an das Messdatenerfassungsmodul angeschlossenes Auswertemodul 4b und ein an das Auswertemodul angeschlossenes Schalteransteuermodul 4c auf. Das Messdatenerfassungsmodul 4a ist zur Erfassung des Generatorstromes I_{G} und/oder der auf der Versorgungsgleichspannungsleitung 11a bereitgestellten Versorgungsgleichspannung B+ vorgesehen. Das Auswertemodul 4b detektiert Lastabschaltungen durch eine Auswertung des Gradienten dI_{G}/dt des Generatorstromes I_{G} und/oder des Gradienten dB+/dt der Versorgungsgleichspannung B+. Übersteigt der ermittelte Gradient bzw. übersteigen die ermittelten Gradienten vorgegebene Schwellenwerte, dann generiert das Schalteransteuermodul 4c die oben beschriebenen Steuersignale s1 für den Schalter 5 und s3 für den Generatorregler 1 bzw. s1 für den Schalter 5, s2 für den Schalter 10 und ggf. s3 für den Generatorregler 1.

Die nachfolgende Tabelle zeigt Beispiele für den Stromabfall und den Spannungsanstieg im Falle eines Load dump:

| Load dump-Fall | dI_{G}/dt | dB+/dt |
|---|---|---|
| 6000 rpm, Volllast auf 20% I_{G}nenn | -0,4 A/µs | + 40,0 mV/µs |
| 6000 rpm, Volllast auf 0 A | -0,8 A/µs | + 40,0 mV/µs |
| 18000 rpm, Volllast auf 0 A | -0,8 A/µs | + 40,0 mV/µs |

Der Stromgradient ist lediglich abhängig von der Stromdifferenz vor und nach der Lastabschaltung und unabhängig von der Generatordrehzahl. Im ungünstigsten Fall tritt eine Abschaltung von Volllast auf 0 A auf. Der Spannungsgradient ist unabhängig von diesen Einflussgrößen.

Die Verwendung einer Detektoreinheit 4, wie sie oben beschrieben wurde, bietet außer einem Load dump-Schutz und einer Energiespeicherung zudem die Möglichkeit, dass in der Gleichrichterbrücke 3 Zenerdioden mit einer geringeren Stromklasse verwendet werden können, beispielsweise ein 50 A-Chip statt eines 65 A-Chips. Dies führt je nach Chipgröße zu einem Kostenvorteil pro Diode im Bereich von etwa 3 bis 5 Cent. Gegebenenfalls kann die Gleichrichterbrücke statt einer Doppelbestückung, d. h. einer Parallelschaltung von jeweils zwei Dioden, mit Einzeldioden ausgerüstet werden. Dies führt zu einem Kostenvorteil je Gleichrichter in Höhe von etwa 75 bis 90 Cent, je nach Chipgröße.

## Patentansprüche

1. Generatorvorrichtung, mit
- einem Generator (2), welcher eine Erregerwicklung und Phasenwicklungen aufweist,
- einem Generatorregler (1), der dem Generator eine Regelspannung liefert,
- einer Gleichrichterbrücke (3) zur Gleichrichtung der vom Generator bereitgestellten Phasenspannungen zwecks Bereitstellung einer Versorgungsgleichspannung für eine schaltbare Last auf einer Versorgungsgleichspannungsleitung (11a),
- einer Detektoreinheit (4) zur Erkennung einer Lastabschaltung, **gekennzeichnet durch**
- einen Energiespeicher (6) und
- einen von der Detektoreinheit ansteuerbaren ersten Schalter (5), der zwischen der Versorgungsgleichspannungsleitung und dem Energiespeicher angeordnet ist, wobei
- die Detekoreinheit nach dem Erkennen einer Lastabschaltung den ersten Schalter durchlässig schaltet, so dass durch die Lastabschaltung gebildete Energie im Energiespeicher abgespeichert wird.

2. Generatorvorrichtung nach Anspruch 1, **dadurch gekennzeichnet, dass** die Detektoreinheit (4) ein Messdatenerfassungsmodul (4a), ein Auswertemodul (4b) und ein Schalteransteuermodul (4c) aufweist.

3. Generatorvorrichtung nach Anspruch 2, **dadurch gekennzeichnet, dass** das Messdatenerfassungsmodul (4a) zur Erfassung des Generatorstromes (I_{G}) und/oder der Versorgungsgleichspannung (B+) vorgesehen ist.

4. Generatorvorrichtung nach Anspruch 2 oder 3, **dadurch gekennzeichnet, dass** das Auswertemodul (4b) Lastabschaltungen durch eine Auswertung des Gradienten des Generatorstromes und/oder des Gradienten der Versorgungsgleichspannung detektiert.

5. Generatorvorrichtung nach einem der Ansprüche 2 bis 4, **dadurch gekennzeichnet, dass** das Schalteransteuermodul (4c) zur Ansteuerung des ersten Schalters vorgesehen ist.

6. Generatorvorrichtung nach einem der vorhergehenden Ansprüche, **dadurch gekennzeichnet, dass** die im Energiespeicher (6) abgespeicherte Energie über einen oder mehrere Schalter (5,7) der Last (8) zuführbar ist.

7. Generatorvorrichtung nach einem der vorhergehenden Ansprüche, **dadurch gekennzeichnet , dass** die Detektoreinheit (4) dem Generatorregler (1) eine detektierte Lastabschaltung signalisiert und der Generatorregler nach Ablauf eines vorgegebenen Zeitintervalles nach der Detektion einer Lastabschaltung dem Generator (2) eine derartige Regelspannung liefert, dass der Generatorstrom reduziert wird.

8. Generatorvorrichtung nach einem der Ansprüche 1 bis 6, **dadurch gekennzeichnet, dass** sie einen in der Versorgungsgleichspannungsleitung (11a) angeordneten zweiten Schalter (10) aufweist, mittels dessen der vom Generator zur Last fließende Generatorstrom reduzierbar ist.

9. Generatorvorrichtung nach Anspruch 7 oder 8, **dadurch gekennzeichnet, dass** die im Energiespeicher (6) abgespeicherte Energie der Last nach erfolgter Reduzierung des Generatorstromes zugeführt wird.

## Claims

1. Generator apparatus having
- a generator (2) which has a field winding and phase windings,
- a generator controller (1) which supplies a control voltage to the generator,
- a rectifier bridge (3) for rectifying the phase voltages, which are supplied by the generator, for the purpose of providing a DC supply voltage for a switchable load on a DC supply voltage line (11a),
- a detector unit (4) for identifying a load disconnection operation, **characterized by**
- an energy storage means (6) and
- a first switch (5) which can be driven by the detector unit and is arranged between the DC supply voltage line and the energy storage means,
with
- the detector unit turning on the first switch after a load disconnection operation is identified, so that energy which is formed by the load disconnection operation is stored in the energy storage means.

2. Generator apparatus according to Claim 1, **characterized in that** the detector unit (4) has a measurement data recording module (4a), an evaluation module (4b) and a switch driving module (4c).

3. Generator apparatus according to Claim 2, **characterized in that** the measurement data recording module (4a) is provided for recording the generator current (I_{G}) and/or the DC supply voltage (B+).

4. Generator apparatus according to Claim 2 or 3, **characterized in that** the evaluation module (4b) detects load disconnection operations by evaluating the gradient of the generator current and/or the gradient of the DC supply voltage.

5. Generator apparatus according to one of Claims 2 to 4, **characterized in that** the switch driving module (4c) is provided for driving the first switch.

6. Generator apparatus according to one of the preceding claims, **characterized in that** the energy which is stored in the energy storage means (6) can be supplied to the load (8) by means of one or more switches (5, 7).

7. Generator according to one of the preceding claims, **characterized in that** the detector unit (4) signals a detected load disconnection operation to the generator controller (1) and, after a predefined time interval following the detection of a load disconnection operation has elapsed, the generator controller supplies a control voltage, which has the effect of reducing the generator current, to the generator (2).

8. Generator apparatus according to one of Claims 1 to 6, **characterized in that** it has a second switch (10) which is arranged in the DC supply voltage line (11a) and by means of which the generator current which flows from the generator to the load can be reduced.

9. Generator apparatus according to Claim 7 or 8, **characterized in that** the energy which is stored in the energy storage means (6) is supplied to the load after the generator current has been reduced.

## Revendications

1. Ensemble de générateur comprenant :
un générateur (2) doté d'un bobinage d'excitation et de bobinages de phase,
un régulateur (1) de générateur qui délivre une tension de régulation au générateur,
un pont redresseur (3) qui redresse les tensions de phase délivrées par le générateur pour délivrer une tension continue d'alimentation à une charge commutable sur un conducteur (11a de tension continue d'alimentation,
une unité de détection (4) qui détecte un débranchement de la charge,
**caractérisé par**
un accumulateur d'énergie (6) et
un premier commutateur (5) asservi à l'unité de détection et disposé entre le conducteur de tension continue d'alimentation et l'accumulateur d'énergie,
l'unité de détection rendant conducteur le premier commutateur après détection d'un débranchement de la charge, de telle sorte que l'énergie délivrée par le débranchement de la charge puisse être conservée dans l'accumulateur d'énergie.

2. Ensemble de générateur selon la revendication 1, **caractérisé en ce que** l'unité de détection (4) présente un module (4a) de saisie de données de mesure, un module d'évaluation (4b) et un module (4c) de commande du commutateur.

3. Ensemble de générateur selon la revendication 2, **caractérisé en ce que** le module (4a) de saisie de données de mesure est prévu pour saisir le courant (Ig) du générateur et/ou la tension continue d'alimentation (B+).

4. Ensemble de générateur selon les revendications 2 ou 3, **caractérisé en ce que** le module d'évaluation (4b) détecte les débranchements de la charge par une évaluation du gradient du courant du générateur et/ou du gradient de la tension continue d'alimentation.

5. Ensemble de générateur selon l'une des revendications 2 à 4, **caractérisé en ce que** le module (4c) de commande du commutateur est prévu pour commander le premier commutateur.

6. Ensemble de générateur selon l'une des revendications précédentes, **caractérisé en ce que** l'énergie conservée dans l'accumulateur d'énergie (6) peut être apportée à la charge (8) par l'intermédiaire d'un ou de plusieurs commutateurs (5, 7).

7. Ensemble de générateur selon l'une des revendications précédentes, **caractérisé en ce que** l'unité de détection (4) signale au régulateur (1) du générateur qu'il a détecté un débranchement de la charge et **en ce qu'**après qu'un intervalle de temps prédéterminé s'est écoulé après la détection d'un débranchement de la charge, le régulateur du générateur délivre au générateur (2) une tension de régulation qui réduit le courant du générateur.

8. Ensemble de générateur selon l'une des revendications 1 à 6, **caractérisé en ce qu'**il présente un deuxième commutateur (10) disposé dans le conducteur (11a) de tension continue d'alimentation et au moyen duquel le courant du générateur qui s'écoule du générateur à la charge peut être réduit.

9. Ensemble de générateur selon les revendications 7 ou 8, **caractérisé en ce que** l'énergie conservée dans l'accumulateur d'énergie (6) est envoyée à la charge après que le courant du générateur a été réduit.
